**Europäisches Patentamt**

**European Patent Office**

**Office européen des brevets**

(11) Veröffentlichungsnummer: **0 140 314**
**B1**

(12) **EUROPÄISCHE PATENTSCHRIFT**

(45) Veröffentlichungstag der Patentschrift:
**17.11.88**

(21) Anmeldenummer: **84112674.1**

(22) Anmeldetag: **19.10.84**

(51) Int. Cl.⁴: **F 16 K 3/02**

(54) **Gleitschieberventil.**

(30) Priorität: **29.10.83 DE 3339441**

(43) Veröffentlichungstag der Anmeldung:
**08.05.85 Patentblatt 85/19**

(45) Bekanntmachung des Hinweises auf die Patenterteilung:
**17.11.88 Patentblatt 88/46**

(84) Benannte Vertragsstaaten:
**CH DE FR LI**

(56) Entgegenhaltungen:
**DE - C - 736 861**
**DE - C - 1 093 633**
**FR - A - 1 216 488**
**US - A - 2 827 260**
**US - A - 3 955 591**

(73) Patentinhaber: **Schubert & Salzer Maschinenfabrik Aktiengesellschaft, Friedrich-Ebert-Strasse 84, D-8070 Ingolstadt (DE)**

(72) Erfinder: **Bälz, Jürgen, Dipl.-Ing., Luidgardweg 10, D-7102 Weinsberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Gleitschieberventil mit einem zwischen den Enden zweier Rohrleitungen eingespannten flanschlosen Gehäuse, das einen gegenüber den angrenzenden Rohrleitungen erweiterten Innenraum zur Aufnahme einer stationären und einer hierzu verschiebbaren Ventilplatte aufweist.

Bei Gleitschieberventilen dieser Art ist die stationäre Ventilplatte in Nähe ihres Aussenumfanges axial eingeklemmt (US-A-3 955 591). Um den notwendigen Verstellweg für die bewegbare Ventilplatte zu schaffen, besitzt das Gehäuse gegenüber den angrenzenden Rohrleitungen einen im Durchmesser vergrösserten Innenraum. Um auch bei unsachgerechter Installation eine einwandfreie Abdichtung zwischen Ventilgehäuse und angrenzenden Rohrleitungen zu erzielen, ist eine bestimmte Grösse der Dichtfläche zwischen Ventilgehäuse und Rohrleitung vorgeschrieben, so dass die Dichtfläche über den Abstützbereich der stationären Ventilplatte, der durch die Grösse des Gehäuseinnenraumes vorgegeben ist, radial nach innen reicht. Der dem Gehäuseinnenraum zugewandte Abstützbereich der stationären Ventilplatte ist somit kleiner als der Abstützbereich zwischen der stationären Ventilplatte und dem Ende der angrenzenden Rohrleitung. Hierdurch kommt es bei zu festem und insbesondere bei ungleichmässigem Anziehen der das Gehäuse mit den Flanschen der Rohrleitung verbindenden Schrauben zu einem Verziehen der stationären Ventilplatte. Dies führt zu einer ungleichmässigen Auflage der verschiebbaren Ventilplatte auf der stationären Ventilplatte, so dass eine einwandfreie Abdichtfunktion dieser beiden Ventilplatten nicht mehr gewährleistet ist. Dasselbe kann bei starkem Mediumdruck bewirkt werden.

Bei einem Gleitschieberventil mit einem geteilten Gehäuse ist es bekannt, die stationäre Ventilplatte zwischen zwei gleich grossen Flächen einzuspannen (US-A-2 827 260). Dabei sind in beiden Stirnflächen der stationären Ventilplatte zwischen dem Einspannbereich und dem mit der beweglichen Ventilplatte zusammenarbeitenden Dichtbereich Ringnuten vorgesehen, so dass der verbleibende Verbindungsbereich zwischen dem Einspannbereich und dem Dichtbereich evtl. auftretende Biegemomente aufnehmen kann. Für eine Anwendung im Zusammenhang mit einem flanschlosen Gehäuse und vorgegebenen Dichtflächengrössen ist die bekannte Vorrichtung jedoch nicht geeignet, da dann zur Vermeidung von unterschiedlich grossen Stützflächen auf den beiden Seiten der stationären Ventilplatte die für die Zusammenarbeit mit der beweglichen Ventilplatte vorgesehene Dichtfläche so verringert werden müsste, dass der steuerbare Durchflussquerschnitt im Vergleich zu den beiden benachbarten Rohrleitungsquerschnitten unterdimensioniert wäre.

Aufgabe der Erfindung ist es daher, bei einem Gleitschieberventil mit flanschlosem Gehäuse sicherzustellen, dass unabhängig von der sorgfältigen Ausführung der Installation und den Betriebsbedingungen stets eine einwandfreie Dichtungsfunktion der Ventilplatten gewährleistet ist. Dabei sollen für die Rohrleitungen, zwischen denen das flanschlose Gehäuse eingespannt wird, genormte Flansche Anwendung finden und die vorgeschriebenen Dichtflächengrössen zwischen Gehäuse und Flanschen eingehalten werden können, während das Gehäuse einen möglichst hohen Durchfluss ermöglichen soll.

Diese Aufgabe wird erfindungsgemäss dadurch gelöst, dass abflussseitig im Gehäuse ein ringförmiger Einsatz mit etwa dem gleichen Innendurchmesser wie die angrenzende Rohrleitung vorgesehen ist, dass dieser Einsatz sich abflussseitig mit einer als Dichtfläche ausgebildeten Radialfläche an der angrenzenden Rohrleitung abstützt, während er gehäuseseitig auf einer geringeren Fläche als abflussseitig eingespannt ist, wobei der Innendurchmesser der gehäuseseitigen Fläche durch den Innendurchmesser des erweiterten Innenraumes des Gehäuses vorgegeben ist, und dass ferner die stationäre Ventilplatte einen gegenüber der Dichtfläche kleinen, ringförmigen Bereich aufweist, mit dem sie sich dichtend am Einsatz abstützt, während der Restbereich der stationären Ventilplatte sowohl gegenüber dem Einsatz als auch dem Gehäuse Freiräume aufweist. Der Einsatz kompensiert den Durchmesserunterschied zwischen Gehäuseinnenraum und abflussseitiger Rohrleitung und bildet gegenüber der Rohrleitung eine Dichtfläche vorgeschriebener Grösse. Da er gehäuseseitig auf einer geringeren Fläche als abflussseitig eingespannt ist, kann er einem axialen Druck – wie er durch falsches Einspannen auftritt – ausweichen. Durch die relativ kleine ringförmige Abstützfläche für die stationäre Ventilplatte wird ein Auffangbereich für die Spannungen geschaffen, die durch falsches Anziehen der das Gehäuse einspannenden Klemmschrauben oder durch den Mediumdruck erzeugt werden. Da ausser in diesem ringförmigen Bereich die stationäre Ventilplatte frei von Abstützungen ist, kann ein Verziehen durch Biegemomente nicht eintreten. Ausser an der sich am Einsatz abstützenden Fläche ist die stationäre Ventilplatte von einem Freiraum umgeben, so dass Verschiebungen und Dehnungen sowie Biegebewegungen virtueller Art der stationären Ventilplatte stattfinden können. Somit kann auch die stationäre Ventilplatte, wenn die verschiebbare Ventilplatte aufgrund des Mediumdruckes verformt wird, diese Verformung ungehindert mitvollziehen, so dass nach wie vor die beiden Ventilplatten einwandfrei dichtend aneinander anliegen.

Der ringförmige Einsatz kann verschieden ausgebildet sein. Vorzugsweise ist er mit der stationären Ventilplatte verbunden. Bei einer unlösbaren Verbindung ist eine einwandfreie Abdichtung zwischen Einsatz und stationärer Ventilplatte am sichersten gewährleistet. Der ringförmige Einsatz und die stationäre Ventilplatte sind, insbesondere bei komplizierteren Profilen, vorzugsweise mittels einer Plasma-Schweissnaht miteinander verbunden.

Der ringförmige Einsatz weist gemäss einer zweckmässigen Ausgestaltung des Erfindungsgegenstandes eine Abstützschulter auf, an welcher sich die stationäre Ventilplatte mit der Stirnfläche eines konzentrischen Vorsprunges abstützt, wobei vorteilhafterweise die stationäre Ventilplatte im Anschluss an diese Stirnfläche einen im Einsatz radial geführten Zentriervorsprung aufweist.

Gemäss einer bevorzugten Ausführung stützt sich die stationäre Ventilplatte nicht an beliebiger Stelle am ringförmigen Einsatz ab, sondern in dessen äusseren Randbereich. Hierdurch kann konstruktiv auf besonders einfache Weise gewährleistet werden, dass die stationäre Ventilplatte Verschiebungen und Dehnungen und Biegebewegungen ausführen kann, um dadurch eine einwandfreie Dichtfunktion zwischen den beiden Ventilplatten zu gewährleisten. Zum Abstützen der stationären Ventilplatte am ringförmigen Einsatz ist dabei zweckmässigerweise ein Ringsteg vorgesehen, der vorzugsweise einstückig an den ringförmigen Einsatz angeformt ist.

Gleitschieberventile mit einem flanschlosen, zwischen den Enden zweier Rohrleitungen eingespannten Gehäuse haben sich bisher in der Praxis nicht durchsetzen können, da eine unsachgemässe Installation eines solchen Gehäuses immer wieder zu nicht einwandfrei abdichtenden Ventilen führte. Die vorliegende Erfindung schafft erstmals eine Lösung, durch welche unabhängig von der Ausbildung und Geschicklichkeit des Personals eine Beeinträchtigung des Gleitschieberventils durch die Installation ausgeschlossen wird. Durch die Erfindung wird somit erstmals eine praxisgerechte Lösung für ein ein flanschloses Gehäuse aufweisendes Gleitschieberventil geschaffen. Darüber hinaus ist diese Lösung einfach im Aufbau und kostengünstig in der Fertigung.

Weitere Einzelheiten der Erfindung werden nachstehend anhand von Zeichnungen näher erläutert. Es zeigen:

Fig. 1 ein erfindungsgemäss ausgebildetes Gleitschieberventil im Längsschnitt;

Fig. 2 ein Detail des in Fig. 1 gezeigten Gleitschieverventils im Längsschnitt;

Fig. 3 im Längsschnitt eine Abwandlung des in Fig. 2 gezeigten Details des erfindungsgemässen Gleitschieberventils; und

Fig. 4 im Längsschnitt eine weitere Abwandlung des in Fig. 2 gezeigten Details des erfindungsgemässen Ventils.

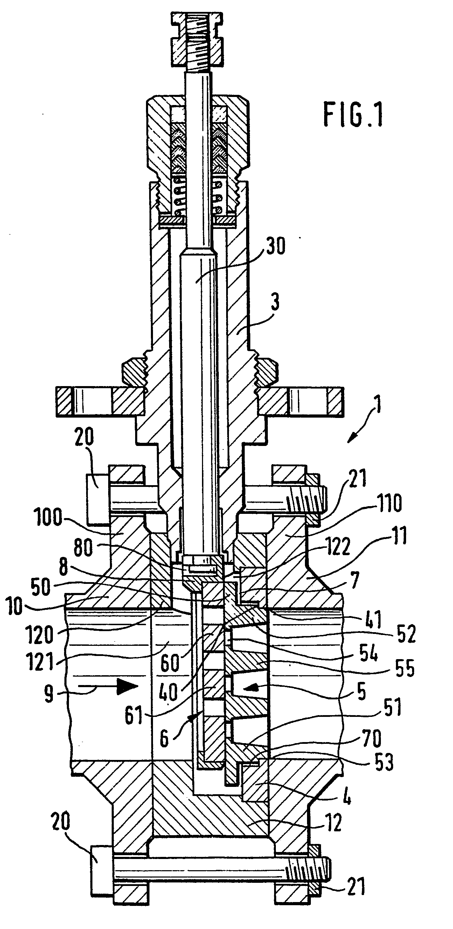

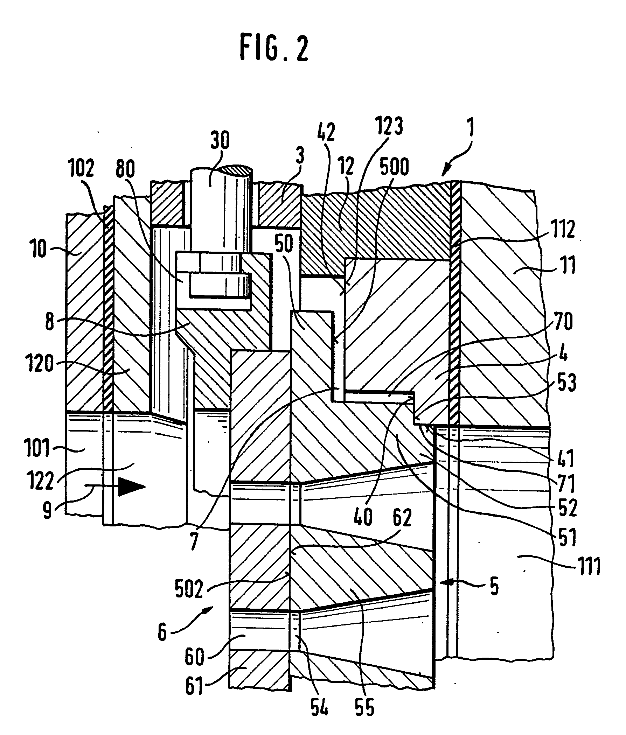

Ein erstes Ausführungsbeispiel eines Gleitschieberventiles 1 wird zunächst anhand der Fig. 1 und 2 beschrieben. Dieses Gleitschieberventil 1 besitzt ein flanschloses Gehäuse 12, das zwischen den Enden 10 und 11 zweier Rohrleitungen eingespannt ist. Zu diesem Zweck besitzt jedes Ende 10 und 11 jeweils einen Flansch 100 bzw. 110, die mit Hilfe von Schrauben 20 und Muttern 21 gegeneinandergezogen werden und dabei das Gehäuse 12 dichtend zwischen sich einspannen. Mit dem Gehäuse 12 ist ein Oberteil 3 verbunden, in welchem in bekannter Weise ein Ventilschaft 30 dichtend geführt wird. Der Antrieb sowie die notwendigen Dichtungen sind allgemein bekannt, so dass auf ihre Beschreibung verzichtet werden kann.

Das Gehäuse 12 hat im wesentlichen die Form eines Topfes mit einer Öffnung 121 in seinem Boden 120, wobei der Querschnitt der Öffnung 121 im wesentlichen gleich gross ist wie der freie Innendurchmesser der Rohrenden 10 und 11. Das Gehäuse 12 besitzt einen gegenüber der Öffnung 121 sowie dem Innendurchmesser der beiden Rohrleitungen (Rohrenden 10 und 11) erweiterten Innenraum 122 zur Aufnahme einer stationären Ventilplatte 5 sowie einer dichtend an dieser stationären Ventilplatte 5 anliegenden, verschiebbaren Ventilplatte 6.

Wie der die Durchflussrichtung kennzeichnende Pfeil 9 zeigt, befindet sich diese verschiebbare Ventilplatte 6 auf der Zuflussseite der stationären Ventilplatte 5. Abflussseitig im Gehäuse ist ein bis zum Innenraum 111 des Rohrendes 11 reichender ringförmiger Einsatz 4 vorgesehen, an welchem sich die stationäre Ventilplatte 5 in einer Weise abstützt, die nachstehend noch im Detail beschrieben werden wird.

Wie erwähnt, ist der Innenraum 122 des Gehäuses 12 gegenüber dem Innenraum 111 und auch 101 der Rohrenden 11 und 10 erweitert, da einerseits der Innendurchmesser der Rohre vorgeschrieben ist, andererseits jedoch für den Verstellweg der verschiebbaren Ventilplatte 6 zusätzlich Raum benötigt wird. Der Anschluss des Gehäuses 12 an die Enden 10 und 11 der benachbarten Rohrleitungen muss jedoch über jeweils flächengleiche Kontaktflächen erfolgen. Auf der Zuflussseite des Gehäuses 12 wird dies durch den radial nach innen gezogenen Boden 120 erreicht. Aus Montagegründen ist auf der Abflussseite ein solcher Boden nicht möglich, weshalb der bis zum Innenraum 111 des Rohrendes 11 reichende Einsatz 4 vorgesehen ist. Zwischen den beiden Kontaktflächenpaaren an den beiden Stirnseiten des Gehäuses 12 befindet sich eine die ganze Kontaktfläche überdeckende Dichtscheibe 102 bzw. 112.

Der Einsatz 4 wird somit beim Einspannen des Gehäuses 12 zwischen den Rohrenden 10 und 11 zwischen einer ringförmigen Schulter 123 des Gehäuseteils 12 und dem Rohrende 11 – unter Zwischenschaltung der Dichtscheibe 112 – eingeklemmt.

Der ringförmige Einsatz 4 weist bei dem in den Fig. 1 und 2 gezeigten Ausführungsbeispiel einen abgestuften Innendurchmesser auf und besitzt dadurch eine Schulter 40 für die stationäre Ventilplatte 5, die sich von der dem Innenraum 122 des Gehäuses 12 zugewandten Seite aus mit Hilfe einer Stirnfläche 53 an dieser Schulter 40 abstützt.

Die stationäre Ventilplatte 5 besitzt einen ersten Längenabschnitt 50, der mit der verschiebbaren Ventilplatte 6 zusammenarbeitet. Dieser erste Längenabschnitt 50 überragt den ringförmigen Gehäuseabschnitt 4 in radialer Richtung, liegt an diesem jedoch nicht an, sondern belässt zwischen sich und diesem ringförmigen Gehäuseabschnitt 4 einen Freiraum 7. An diesem ersten Längenabschnitt 50 schliesst sich ein zweiter Längenabschnitt 51 an, der einen geringeren Aussendurchmesser als der erste Längenabschnitt 50 aufweist und gegenüber diesem stufenförmig abgesetzt ist. Dieser zweite Längenabschnitt 51 erstreckt sich unter Belassung eines radialen Freiraumes 70 in den ringförmigen Einsatz 4 hinein und stützt sich über die Stirnfläche 53 dieses Längenabschnittes 51 an der erwähnten Schulter 40 des Einsatzes 4 ab. An diesen zweiten Längenabschnitt 51 der Ventilplatte 5 schliesst sich ein dritter Längenabschnitt 52 an, der gegenüber dem zweiten Längenabschnitt 51 stufenartig im Aussendurchmesser reduziert ist. Dieser dritte Längenabschnitt 52 ragt über die Schulter 40 des ringförmigen Einsatzes 4 hinaus. Der Aussenumfang dieses dritten Längenabschnittes 52 ist mit einer Innenumfangsfläche 41 des Einsatzes 4 dichtend verbunden und bildet darüber hinaus einen im Einsatz 4 radial geführten Zentriervorsprung. Die stationäre Ventilplatte 5 wird auf diese Weise im Gehäuse 12 zentriert und fixiert.

Die stationäre Ventilplatte 5 des gezeigten Gleitschieberventiles 1 besitzt quer zur Hubrichtung der von dem Ventilschaft 30 angetriebenen Ventilplatte 6 mehrere Schlitze 54, die durch Stege 55 voneinander getrennt sind.

In ähnlicher Weise besitzt auch die verschiebbare Ventilplatte 6 eine gleiche Anzahl von Schlitzen 60, die in Flucht mit den Schlitzen 54 der stationären Ventilplatte 5 gebracht werden können. Andererseits können die Schlitze 54 aber auch durch die Stege 61 zwischen den Schlitzen 60 abgedeckt werden.

Zum Antrieb der Ventilplatte 6 ist diese in einer Ausnehmung 80 eines ringförmigen Mitnehmers 8 angeordnet, welcher seinerseits in antriebsmässiger Verbindung mit dem in das Gehäuse 12 ragenden Ventilschaft 30 steht. Zur Abdichtung wird die Ventilplatte 6 in geeigneter Weise elastisch in Anlage an der Ventilplatte 5 gehalten.

Das dargestellte Gleitschieberventil 1 wird vom zu steuernden Medium in Richtung des Pfeiles 9 durchflossen. Dabei übt dieses Medium einen Druck auf die bewegliche Ventilplatte 6 aus, den diese auf die stationäre Ventilplatte 5 überträgt.

Zum Einbauen des Gehäuses 12 des Gleitschieberventils 1 wird das Gehäuse 12 zusammen mit je einer Dichtscheibe 102 bzw. 112 an seinen beiden Stirnflächen zwischen die beiden Enden 10 und 11 zweier Rohrleitungen gesetzt. Sodann werden die Schrauben 20 angezogen. Der ringförmige Einsatz 4 ist im Bereich seines äusseren Umfanges beidseitig eingespannt und kann dem beim Einspannen des Gehäuses 12 zwischen die Flansche 100 und 110 entstehenden Druck nicht nachgeben. Im Bereich des Innenraumes 122 jedoch wird der ringförmige Einsatz 4 nicht abgestützt und gibt dem Druck nach und bewegt die stationäre Ventilplatte 5 etwas vom Rohrende 11 weg. Da die stationäre Ventilplatte 5 sich lediglich in dem gegenüber der durch die Dichtscheibe 112 gebildeten Dichtfläche kleinen ringförmigen Bereich dichtend abstützt und in ihrem Restbereich sowohl gegenüber dem ringförmigen Einsatz als auch dem Gehäuse 12 frei von Abstützungen ist, werden die im Einsatz erzeugten Biegespannungen nicht auf die stationäre Ventilplatte 5 übertragen. Hierdurch bleibt diese Ventilplatte 5 über den gesamten Dichtbereich 502 in paralleler und damit auch dichtender Anlage am Dichtbereich 62 der verschiebbaren Ventilplatte 6. Dies gilt nicht nur bei zu starkem Anziehen der Schrauben 20, sondern auch bei ungleichmässigem Anziehen derselben. Die grossen, durch die Dichtscheibe 102 und 112 gebildeten Dichtflächen verhindern ein Durchsickern des Mediums nach aussen bzw. am Aussenumfang des ringförmigen Einsatzes 4 vorbei in den Innenraum 111 des Rohrendes 11, während die dichtende Anlage der stationären Ventilplatte 5 am ringförmigen Einsatz 4 ein Durchsickern des Mediums zwischen diesen beiden Teilen verhindert.

Wegen des erforderlichen Durchflussquerschnittes der Schlitze 54 und 60 und wegen der erforderlichen Auflagefläche zwischen den beiden Ventilplatten 5 und 6 – damit diese gegenseitig die Schlitze 54 und 60 abdecken bzw. freigeben können – ist konstruktiv für die Ventilplatten 5 und 6 eine gewisse Mindestfläche erforderlich, die nicht unterschritten werden kann. Diese relativ grosse Fläche der Ventilplatten 6 und 5 wird somit dem zu steuernden Medium ausgesetzt, so dass eine grosse Kraft wirksam ist, die eine Verformung der beiden aufeinanderliegenden Ventilplatten 6 und 5 bewirkt. Dabei ist die Verformung in der Mitte der Ventilplatten 6 und 5 am grössten. Da die Ventilplatte 5 nur mit der Innenumfangsfläche 41 des ringförmigen Einsatzes 4 verbunden ist, bildet die verformte Ventilplatte 5 lediglich eine konkave Krümmung. Der aufgrund des Abstandes oder Freiraumes 7 entlastete Randbereich des Längenabschnittes 50 kann bei dieser Verformung in entgegengesetzter Richtung zu der durch den Pfeil 9 gekennzeichneten Durchflussrichtung des Mediums ausweichen, wobei der Freiraum 70 die erforderliche Bewegungsfreiheit bietet. Da die stationäre Ventilplatte 5 dem auf ihm lastenden Druck folgen kann, verformt sie sich im selben Masse wie die sich auf ihr abstützende verschiebbare Ventilplatte 6, ohne dass zwischen den beiden Ventilplatten ein Spalt entsteht. Ein Eindringen von Schmutzpartikeln zwischen die beiden Ventilplatten 5 und 6 wird somit ebenfalls unterbunden. Eine sichere Funktion des Gleitschieberventiles 1 auf die Dauer ist hierdurch gewährleistet.

Die Anlage wird auch nicht durch die jeweilige Arbeitsstellung der beweglichen Ventilplatte 6 beeinträchtigt, da die stationäre Ventilplatte 5 dem auf sie einwirkenden Druck folgen kann. Auch die Schlitze 54 und 60 beeinträchtigen keineswegs die Anlage der beweglichen Ventilplatte 6 an der stationären Ventilplatte 5, da diese Schlitze 54 und 60 in gleicher Weise sowohl bei der stationären Ventilplatte 5 als auch bei der beweglichen Ventilplatte 6 vorgesehen sind. Das gleiche Durchbiegevermögen wird dabei in bekannter Weise durch entsprechende Materialwahl und durch geeignete Materialstärken für die beiden Ventilplatten 5 und 6 gewährleistet.

Der Erfindungsgegenstand kann in verschiedener Weise abgewandelt werden. So ist es prinzipiell ausreichend, wenn die stationäre Ventilplatte 5 mit ihrer Stirnfläche 53 an der Schulter 40 des ringförmigen Einsatzes 4 anliegt, wobei dann durch Zwischenanordnung einer geeigneten Dichtung für eine einwandfreie Abdichtung gesorgt werden kann. Die stationäre Ventilplatte 5 muss dann durch ein nichtgezeigtes elastisches Element – zum Beispiel durch eine Druck- oder Lamellenfeder etc. – in Anlage am ringförmigen Einsatz 4 gehalten werden.

Wenn jedoch damit gerechnet werden muss, dass starke Druckschwankungen auftreten können, so kann es sein, dass dann die Anpresskraft an die stationäre Ventilplatte 5, welche der verschiebbaren Ventilplatte 6 durch ein nichtgezeigtes elastisches Element erteilt wird, nicht ausreicht, um eine Abdichtung zu gewährleisten. In diesem Fall werden die stationäre Ventilplatte 5 und der ringförmige Einsatz 4 dichtend miteinander verbunden. Hierzu eignet sich insbesondere eine Plasma-Schweissnaht 71, da diese besonders spannungsarm ist. Diese Schweissnaht 71 kann zwischen der Stirnfläche 53 und der Schulter 40 vorgesehen werden oder aber – wie beim Beispiel der in den Fig. 1 und 2 abgebildeten Ausführung – zwischen der Innenumfangsfläche 41 des Einsatzes 4 und dem in diesem Fall vorzusehenden dritten Längenabschnitt 52 der Ventilplatte 5.

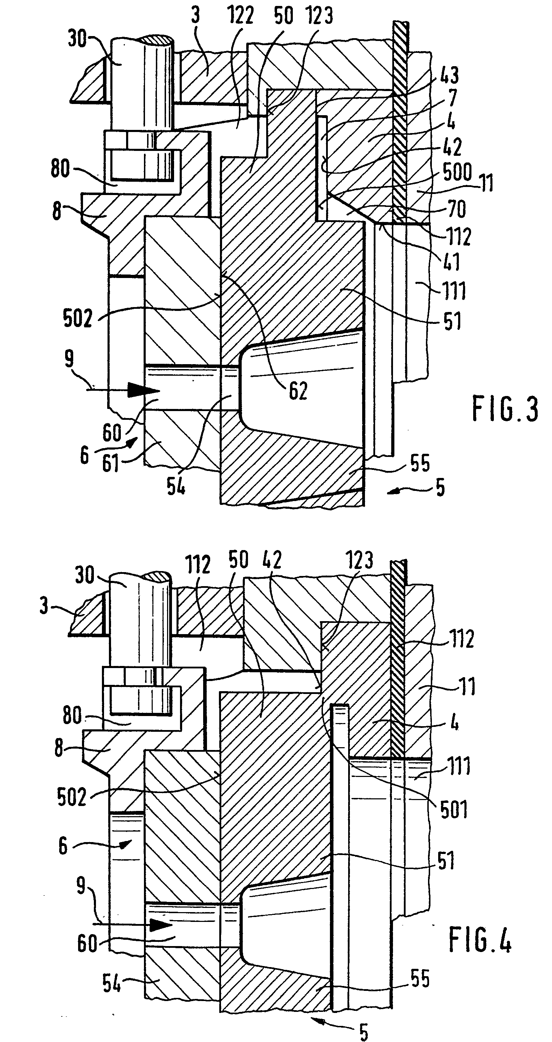

Weitere Abwandlungen des Erfindungsgegenstandes durch Austausch von Elementen untereinander oder gegen Äquivalente sowie Kombinationen hiervon fallen in den Rahmen der vorliegenden Erfindung. So ist zum Beispiel gemäss Fig. 3 vorgesehen, dass sich die stationäre Ventilplatte 5 mit ihrem ersten Längenabschnitt 50 an einer Radialfläche 42 des ringförmigen Einsatzes 4 abstützt. Gemäss Fig. 3 stützt sich die stationäre Ventilplatte 5 im äusseren Randbereich des ringförmigen Einsatzes 4 ab. Dieser trägt auf seiner Radialfläche 42 einen Ringsteg 43, der die Abstützschulter für die stationäre Ventilplatte 5 bildet. Die Stützfläche der stationären Ventilplatte 5 wird dabei durch den äusseren Umfangsbereich der der verschiebbaren Ventilplatte 6 abgewandten Stirnfläche 500 des ersten Längenabschnittes 50 gebildet.

Bei diesem Ausführungsbeispiel ist die stationäre Ventilplatte 5 sowohl auf ihrer dem Innenraum 122 des Gehäuses 12 als auch auf ihrer dem ringförmigen Einsatz 4 zugewandten Seite in einem jeweils gleich grossen Ringbereich axial eingespannt. Im Restbereich befindet sich die stationäre Ventilplatte 5 stets im Abstand vom Einsatz 4, ist somit frei von Abstützungen. Aufgrund des hierdurch gebildeten axialen und radialen Freiraumes 7 und 70 können durch Verformung des Einsatzes 4 in diesem auftretende Biegemomente nicht auf die stationäre Ventilplatte 5 übertragen werden.

Gemäss dem in Fig. 3 gezeigten Ausführungsbeispiel ist der Ringsteg 43 einstückig an dem ringförmigen Einsatz 4 angeformt, doch ist es auch möglich, den Ringsteg als integrierten Bestandteil der stationären Ventilplatte 5 oder auch als separaten Ring auszubilden, der zwischen stationärer Ventilplatte 5 und ringförmigem Einsatz 4 eingelegt wird.

Es ist auch nicht erforderlich, dass der erste Längenabschnitt 50 der stationären Ventilplatte 5 auf seiner der verschiebbaren Ventilplatte 6 zugewandten Seite eine völlig ebene Fläche aufweist. Wie die Fig. 2 und 3 zeigen, kann der erste Längenabschnitt 50 auch in einen die verschiebbare Ventilplatte 6 führenden Dichtbereich 502 und einen einen Teil der Abstützfläche (z.B. Stirnseite 500 oder Ringsteg) bildenden Stützbereich unterteilt sein. Dieser Stützbereich überragt dabei den Dichtbereich 502 in radialer Richtung, während der Dichtbereich 502 nur die für das einwandfreie Führen der verschiebbaren Ventilplatte 6 erforderliche Grösse besitzt.

Gemäss Fig. 4 ist der ringförmige Einsatz 4 einstückig mit der stationären Ventilplatte 5 ausgebildet, wobei dieses kombinierte Teil durch spanabhebende oder plastische Formung erzeugt werden kann. Die stationäre Ventilplatte 5 und der ringförmige Einsatz 4 können aber auch – ebenso wie bei der Ausführung nach Fig. 3 – nichtlösbar, z.B. durch Plasmaschweissen, dichtend miteinander verbunden sein.

Um die Elastizität zwischen dem Einsatz 4 und der stationären Ventilplatte 5 zu verbessern, insbesondere wenn diese Teile nichtlösbar miteinander verbunden sind, ist gemäss Fig. 4 zusätzlich zwischen dem ringförmigen Abstützbereich – der durch die Schweissnaht 71 (siehe Fig. 2) oder Übergangsstelle zwischen Einsatz 4 und stationärer Ventilplatte 5 gebildet wird – und dem mit der verschiebbaren Ventilplatte 6 zusammenarbeitenden Dichtbereich 502 der stationären Ventilplatte 5 ein ringförmiger Abschnitt 501 mit reduziertem Querschnitt vorgesehen.

Die beiden Ventilplatten 5 und 6 sind im gezeigten Ausführungsbeispiel als Schlitzplatten ausgebildet, doch sind auch andere Ausbildungen mit runden oder gebogenen Durchflussöffnungen in den Ventilplatten 5 und 6 je nach Anwendungszweck möglich.

Wenn gewährleistet ist, dass die stationäre Ventilplatte 5 Verschiebungen und Dehnungen sowie Biegebewegungen virtueller Art durchführen kann, um dadurch stets in paralleler und damit auch dichtender Anlage an der bewegbaren Ventilplatte 6 zu bleiben, kann zwischen der sich nicht am Einsatz 4 abstützenden Fläche der stationären Ventilplatte 5 und dem ringförmigen Einsatz 4 auch eine elastische Dichtung vorgesehen werden. Da diese Dichtung keine Momente und Kräfte überträgt, bildet sie auch keine Abstützung für die stationäre Ventilplatte 5.

**Patentansprüche**

1. Gleitschieberventil mit einem zwischen den Enden (10, 11) zweier Rohrleitungen eingespannten flanschlosen Gehäuse (12), das einen gegenüber den angrenzenden Rohrleitungen (10, 11) erweiterten Innenraum (122) zur Aufnahme einer stationären Ventilplatte (5) und einer hierzu verschiebbaren Ventilplatte (6) aufweist, dadurch gekennzeichnet, dass abflussseitig im Gehäuse (12) ein ringförmiger Einsatz (4) mit etwa dem gleichen Innendurchmesser wie die angrenzende Rohrleitung (11) vorgesehen ist, dass dieser Einsatz (4) sich abflussseitig mit einer als Dichtfläche (112) ausgebildeten Radialfläche an der angrenzenden Rohrleitung (11) abstützt, während er gehäuseseitig auf einer geringeren Fläche als abflussseitig eingespannt ist, wobei der Innendurchmesser der gehäuseseitigen Fläche durch den Innendurchmesser des erweiterten Innenraumes (122) des Gehäuses (12) vorgegeben ist, und dass ferner die stationäre Ventilplatte (5) einen gegenüber der Dichtfläche (112) kleinen ringförmigen Bereich (43, 53, 501) aufweist, mit dem sie sich dichtend am Einsatz (4) abstützt, während der Restbereich der stationären Ventilplatte (5) sowohl gegenüber dem Einsatz (4) als auch dem Gehäuse (12) Freiräume (7, 70) aufweist.

2. Ventil nach Anspruch 1, dadurch gekennzeichnet, dass der ringförmige Einsatz (4) und die stationäre Ventilplatte (5) miteinander verbunden sind.

3. Ventil nach Anspruch 2, dadurch gekennzeichnet, dass der Einsatz (4) unlösbar mit der stationären Ventilplatte (5) verbunden ist.

4. Ventil nach Anspruch 3, dadurch gekennzeichnet, dass der ringförmige Einsatz (4) und die stationäre Ventilplatte (5) mittels einer Plasma-Schweissnaht (71) miteinander verbunden sind.

5. Ventil nach einem oder mehreren der Ansprüche 2 bis 4, dadurch gekennzeichnet, dass der ringförmige Einsatz (4) eine Abstützschulter (40) aufweist, an welcher sich die stationäre Ventilplatte (5) mit der Stirnfläche (500) eines konzentrischen Vorsprunges (51) abstützt.

6. Ventil nach Anspruch 5, dadurch gekennzeichnet, dass die stationäre Ventilplatte (5) im Anschluss an die Stirnfläche (500) einen im Einsatz (4) radial geführten Zentriervorsprung (52) aufweist.

7. Ventil nach einem oder mehreren der Ansprüche 1 bis 6, dadurch gekennzeichnet, dass sich die stationäre Ventilplatte (5) im äusseren Randbereich am ringförmigen Einsatz (4) abstützt.

8. Ventil nach Anspruch 7, dadurch gekennzeichnet, dass zum Abstützen der stationären Ventilplatte (5) am ringförmigen Einsatz (4) ein Ringsteg (43) vorgesehen ist.

9. Ventil nach Anspruch 8, dadurch gekennzeichnet, dass der Ringsteg (43) einstückig an den ringförmigen Einsatz (4) angeformt ist.

## Claims

1. A slide gate valve having a flangeless housing (12) which is clamped between the ends (10, 11) of two pipelines, said housing having an inner chamber (122) which is enlarged with respect to the two adjacent pipelines (10, 11) for accommodating a stationary valve plate (5) and a valve plate (6) which is displaceable with respect thereto, characterized in that an annular insert (4) is provided downstream within the housing (12), which insert has substantially the same inside diameter as the adjacent pipeline (11), said insert (4) being supported on its downstream side on a radial face of the adjacent pipeline (11) this radial face constituting a seal (112) whereas the insert is clamped on its side facing said housing by an area which is smaller than on its downstream side, the inside diameter of the area facing said housing being determined by the inner diameter of the enlarged inner chamber (122) of the housing (12), and the stationary valve plate (5) having an annular surface (43, 53, 501) which is small compared with the seal (112), the stationary valve plate being supported against the insert (4) as a seal whereas the remaining area of the stationary valve plate (5) defines clearances (7, 70) with respect as well as to the insert (4) as to the housing (12).

2. A valve as claimed in claim 1, characterized in that the annular insert (4) and the stationary valve plate (5) are interconnected one to another.

3. A valve according to claim 2, characterized in that the insert (4) is connected with the stationary valve plate (5) in an unsolvable manner.

4. A valve according to claim 3, characterized in that the annular insert (4) and the stationary valve plate (5) are connected one to another by means of a plasma-welded joint (71).

5. Valve according to one or more of claims 2 to 4, characterized in that the annular insert (4) has a supporting shoulder (40) against which is supported the stationary valve plate (5) and the end face (500) of a concentric projection (51).

6. Valve according to claim 5, characterized in that the stationary valve plate (5) has a centering projection (52) in continuation of the end face (500) which centering projection (52) is radially guided in the insert (4).

7. Valve according to one or more of claims 1 to 6, characterized in that the stationary valve plate (5) is supported at its outer edge area by the annular insert (4).

8. Valve according to claim 7, characterized in that for supporting the stationary valve plate (5) an annular web (43) is provided at the annular insert (4).

9. Valve according to claim 8, characterized in that the annular web (43) is integrally formed in one piece with the annular insert (4).

## Revendications

1. Vanne à tiroir coulissant comportant un corps (12) sans bride qui est encastré entre les extrémités (10, 11) de deux conduites et qui présente un espace intérieur (122) élargi par rapport aux conduites voisines (10, 11) et destiné à loger une table fixe (5) et un tiroir mobile (6) pouvant coulisser par rapport à cette table, caractérisée en ce qu'il est prévu, du côté aval dans le corps (12), une garniture annulaire (4) ayant approximativement le même diamètre intérieur que la conduite voisine (11); en ce que, côté aval, cette garniture (4) s'appuie contre la conduite voisine (11) par une surface radiale conçue comme surface d'étanchéité

**0 140 314**

(112), tandis que, côté corps, elle est bridée sur une surface plus petite que côté aval, étant précisé que le diamètre intérieur de la surface côté corps est prescrit par le diamètre intérieur de l'espace intérieur élargi (122) du corps (12); et en ce qu'en outre la table fixe (5) présente, par rapport à surface d'étanchéité (112), une petite zone annulaire (43, 53, 501) par laquelle elle s'appuie de façon étanche contre la garniture (4), tandis que le reste de la table fixe (5) présenté des espaces libres (7, 70) aussi bien en face de la garniture (4) qu'en face du corps (12).

2. Vanne selon la revendication 1, caractérisée en ce que la garniture annulaire (4) et la table fixe (5) sont liées l'une à l'autre.

3. Vanne selon la revendication 2, caractérisée en ce que la garniture (4) est liée de façon inamovible à la table fixe (5).

4. Vanne selon la revendication 3, caractérisée en ce que la garniture annulaire (4) et la table fixe (5) sont reliées l'une à l'autre par un cordon de soudure (71) au plasma.

5. Vanne selon une ou plusieurs des revendications 2 à 4, caractérisée en ce que la garniture annulaire (4) présente un épaulement d'appui (40) sur lequel la table fixe (5) s'appuie par la surface frontale (500) d'une saillie concentrique (51).

6. Vanne selon la revendication 5, caractérisée en ce que la table fixe (5) présente, à la suite de la surface frontale (500), une saillie de centrage (52) radialement guidée dans la garniture (4).

7. Vanne selon une ou plusieurs des revendications 1 à 6, caractérisée en ce que la table fixe (5) s'appuie, dans la zone de bordure extérieure, contre la garniture annulaire (4).

8. Vanne selon la revendication 7, caractérisée en ce qu'une nervure annulaire (43) est prévue pour constituer une portée d'appui de la table fixe (5) contre la garniture annulaire (4).

9. Vanne selon la revendication 8, caractérisée en ce que la nervure annulaire (43) est venue d'une pièce sur la garniture annulaire (4).

FIG.1

# FIG. 2

FIG.3

FIG.4